(19) Europäisches Patentamt
European Patent Office
Office européen des brevets

(11) **EP 2 076 615 B1**

(12) **EUROPÄISCHE PATENTSCHRIFT**

(45) Veröffentlichungstag und Bekanntmachung des Hinweises auf die Patenterteilung:
**07.09.2016   Patentblatt 2016/36**

(21) Anmeldenummer: **07818859.6**

(22) Anmeldetag: **10.10.2007**

(51) Int Cl.:
***B23K 26/322*** (2014.01)

(86) Internationale Anmeldenummer:
**PCT/EP2007/008786**

(87) Internationale Veröffentlichungsnummer:
**WO 2008/046542 (24.04.2008 Gazette 2008/17)**

(54) **VERFAHREN ZUM RISSFREIEN SCHWEISSEN, REPARATURSCHWEISSEN ODER AUFTRAGSSCHWEISSEN HEISSRISSANFÄLLIGER WERKSTOFFE**

METHOD FOR THE CRACK-FREE WELDING, REPAIR WELDING OR SURFACE WELDING OF MATERIALS PRONE TO FORM HOT CRACKS

PROCÉDÉ DE SOUDAGE SANS FISSURATION, DE SOUDAGE DE RÉPARATION OU DE RECHARGEMENT SANS FISSURATION DE MATERIAUX AYANT TENDANCE À DES FISSURATIONS À CHAUD

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.10.2006   DE 102006048580**

(43) Veröffentlichungstag der Anmeldung:
**08.07.2009   Patentblatt 2009/28**

(73) Patentinhaber: **Fraunhofer-Gesellschaft zur Förderung der angewandten Forschung e.V.**
**80686 München (DE)**

(72) Erfinder:
• **BRENNER, Berndt**
  **01328 Dresden (DE)**
• **GÖBEL, Gunther**
  **01454 Radeberg (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
| | |
|---|---|
| WO-A-03/031108 | GB-A- 794 001 |
| GB-A- 846 597 | GB-A- 2 283 448 |
| JP-A- 10 140 252 | JP-A- H10 314 835 |
| US-A- 3 497 662 | US-A1- 2004 050 906 |

• **PLOSHIKHIN V ET AL: "Intergrated Mechanical-Metallurgical Approach to Modelling of SolidificationCracking in Welds" HOT CRACKING PHENOMENA IN WELDS, XX, XX, Bd. 244, 2005, Seiten 223-244, XP008086490 in der Anmeldung erwähnt**

EP 2 076 615 B1

**Beschreibung**

Die Erfindung bezieht sich auf ein Verfahren zum Schweißen von metallischen Bauteilen aus heißrissanfälligen Werkstoffen gemäß dem Oberbegriff vom Anspruch 1. Objekte, bei denen ihre Anwendung zweckdienlich und vorteilhaft ist, sind alle Bauteile, die aus mehrphasig erstarrenden Legierungen mit einem breiten Erstarrungsintervall bestehen oder aus Legierungen aufgebaut sind, die Legierungselemente oder Verunreinigungselemente enthalten, die ein niedrig schmelzendes Eutektikum mit einem oder mehreren Hauptlegierungselementen bilden und die mittels Schmelzschweißverfahren hoher Leistungsdichte gefügt werden sollen. Solche Werkstoffe, die bisher nur unzureichend rissfrei geschweißt werden können, sind z. B. ferritische, ferritisch-perlitische oder austenitische Automatenstähle, aushärtbare Al-Legierungen, heißrissgefährdete austenitische Stähle, Nickellegierungen u. s. w.. Besonders vorteilhaft ist die Erfindung für alle die Schweißaufgaben einsetzbar, bei denen aus verfahrenstechnischen, eigenschaftsmäßigen oder betriebswirtschaftlichen Gründen kein Schweißzusatzwerkstoff zur Sicherstellung der heißrissfreien Schweißbarkeit angewendet werden kann oder der Einsatz von Schweißzusatzwerkstoff nicht ausreicht, um die Heißrisse prozesssicher zu vermeiden.

Weitere potenzielle Einsatzfelder sind das Vermeiden von so genannten Mittelrippendefekten beim Laserstrahlschweißen von dickeren Blechen aus Baustählen, von Mittelrippenrissen in der Schweißzone von dünnen Blechen aus austenitischen Edelstählen sowie von sehr steifen oder sehr hart eingespannten Bauteilen.

Darüber hinaus kann das Verfahren auch zur Vermeidung von Heißrissen im Schweißgut beim Reparatur- oder Auftragschweißen eingesetzt werden.

Stand der Technik:

Heißrisse sind ein schwerwiegendes schweißtechnisches Problem, das den Einsatz von wirtschaftlich wichtigen und einsatztechnisch vorteilhaften Legierungen in einer Reihe von Schweißkonstruktionen verhindert. Sie treten überwiegend in mehrphasig erstarrenden Legierungen, bei Legierungen mit Nebenlegierungs- oder Verunreinigungselementen, die ein niedrig schmelzendes Eutektikum mit einem oder mehreren Legierungselementen bilden, sowie in Fällen sehr schneller, in Richtung der Blechebene verlaufender Erstarrung oder bei sehr steifen Schweißnahtumgebungen auf.

Dem entsprechend umfangreich und vielfältig sind die Bemühungen und bisher bekannten Lösungsansätze, um das Problem der Heißrissigkeit zu lösen.

So versucht man z. B. durch die Verwendung von geeigneten Schweißzusatzwerkstoffen die metallurgischen Ursachen der Heißrissbildung - die Bildung niedrig-schmelzender Phasen oder von Korngrenzenfilmen - zu beseitigen. Dieses Verfahren ist jedoch trotz seiner breiten technischen Anwendung nicht in jedem Fall geeignet. So gibt es z. B. nicht für jede heißrissanfällige Legierung geeignet abgestimmte Schweißzusatzwerkstoffe. Darüber hinaus wird in der Regel der Schweißprozess teurer. Nachteilig kann sich weiterhin auswirken, dass bei höchstfesten Werkstoffen durch die Verwendung von Schweißzusatzwerkstoffen, die die Zusammensetzung des Schweißgutes in Richtung eutektische Erstarrung verschieben, die mechanische Belastbarkeit der Schweißnaht sinken kann. Weiterhin ist es generell unvorteilhaft, dass damit nicht die primäre Ursache der Heißrissbildung -das Überschreiten von kritischen Zugdehnungen bzw. kritischen Dehnungsraten während der Erstarrung im Zweiphasengebiet - bekämpft wird.

Die GB 794,001 A offenbart ein Verfahren gemäß dem Oberbegriff vom Anspruch 1 und beschreibt das Lichtbogenschweißen oder autogene Verschweißen der Längs- oder Umfangsnähte von großen rohrförmigen Elementen (beispielsweise Kessel). Dabei werden elektrische Induktionsheizungen verwendet, um vor dem Verschweißen und nach dem Schweißen zur gleichen Zeit (wie die Naht geschweißt wird) die Naht progressiv zu erwärmen. Die Wärmebehandlungstemperatur wird durch eine Induktionsheizung erhalten und es wird verhindert, dass eine zu schnelle Abkühlung der Schweißverbindung geschieht. Der Heizer besteht aus wassergekühlten Induktionsschleifen, die einstellbar sind auf den Durchmesser der Naht.

Zur Vermeidung von kritischen Dehnungen und/oder Dehnungsraten während der Erstarrung im Zweiphasengebiet sind verschiedene Verfahren bekannt geworden. So wird z. B. in WO 03/031108 (W. Kurz, J.-D. Wagniere, M. Rappaz, F. de Lima: "Process for Avoiding Cracking in Welding") ein Verfahren beschrieben, mit dessen Hilfe die beim Laserstrahlschweißen von Al-Legierungen auftretende Heißrissigkeit bekämpft wird, indem eine zweite Wärmequelle - vorzugsweise ein Laser - einer ersten Wärmequelle - vorzugsweise ebenfalls ein Laser- in einem konstanten Abstand folgt, die zweite Wärmequelle direkt auf die Erstarrungszone gerichtet ist und die Leistung der zweiten Wärmequelle so eingestellt wird, dass die lokale Abkühlrate oberflächennaher Bereiche der Erstarrungszone reduziert wird oder diese sogar noch einmal lokal kurz erwärmt werden. Die zusätzliche nachlaufende Wärmequelle kann dabei aus einer Elektronenstrahl-, Laserstrahl-, Bogen- oder Plasmaquelle oder auch einer Kombination zweier Quellen bestehen und arbeitet mit einer geringeren Leistungsdichte als die erste Wärmequelle.

Unter Anwendung eines 1,7 kW $CO_2$-Lasers als Schweißlaser und eines 1,2 kW gepulsten Nd:YAG-Lasers als zweite Wärmequelle konnten 1,0 mm dicke Bleche aus der Al-Legierung 6016 heißrissfrei im I-Stoß verschweißt werden. Die besten Resultate wurden erreicht, wenn bei einer Vorschubgeschwindigkeit von $v_S$ = 3,6 m/min der auf einen Fokusdurchmesser von $d_f$ = 0,6 mm fokussierte Nd:YAG-Laserstrahl in einem Abstand von 3 mm hinter dem Mittelpunkt des $CO_2$-Laserstrahles an-

geordnet wurde. Durch den lokalen zweiten Energieeintrag mit einer Pulsenergie von 8 J, einer Pulsintensität von 30 W/cm² und einer Frequenz von 150 Hz wurde ein vergrößertes Schmelzbad und eine Reduzierung der lokalen Abschreckrate von 2600 K/s auf 1500 K/s erreicht. Als entscheidend für den Wirkmechanismus wird herausgestellt, dass der zweite Laserstrahl direkt auf die Erstarrungszone wirkt. Damit werden nach Erkenntnis der Erfinder folgende Effekte erreicht, die der Heißrissbildung entgegenwirken:

- Verringerung des Temperaturgradienten und der Abkühlgeschwindigkeit an der Oberfläche der Erstarrungszone,
- Vergrößerung der Zeitdauer, in der Schmelze in die Erstarrungszone nachgespeist werden kann,
- Entstehung eines gleichachsigen Gefüges in der Mittelebene der Schweißzone

Der anwendungstechnische Nachteil dieser Lösung besteht darin, dass damit nur dünne Bleche heißrissfrei geschweißt werden können. Die Ursache dafür liegt darin, dass die Laserenergie des zweiten Lasers nur an der Oberfläche absorbiert wird und die Wärmeeindringtiefe während der sehr kurzen Wechselwirkungszeit des Laserstrahles mit der Oberfläche der Erstarrungszone von maximal

$$\Delta t = \frac{d_f}{v_S} = \frac{0,6 \ mm}{3600 \ mm} \ min = 0,01 \ s$$ nur sehr klein ist. Deshalb ist die Tiefe der Zone mit verringerter Abkühlgeschwindigkeit sehr klein. Ähnlich verhält es sich bei der Anwendung der anderen beanspruchten Energiequellen für die zweite Wärmequelle. Die Tiefe der Zone mit verringerter Abkühlgeschwindigkeit wird noch kleiner, wenn Stähle mit ihrer viel geringeren Wärmeleitfähigkeit nach diesem Verfahren verschweißt werden sollen.

In Analogie zu dieser oben aufgeführten Lösung des Standes der Technik ist gleichfalls für das heißrissfreie Verschweißen von dünnen Al-Blechen bekannt geworden (siehe z. B.: V. Ploshikhin, A. Prikhodovsky, M. Makhutin, A. Ilin, H.-W. Zoch "Integrated Mechanical-Metallurgical Approach to Modelling of Solidification Cracking in Welds" in: Th. Böllinghaus, H. Herold (Hrsg.): Hot Cracking Phenomena in Welds, Springer Verlag 2005, ISBN 3-540-22332-0, Seiten 223-244), neben dem stark fokussierten Laserstrahl zum Schweißen einen zweiten defokussierten Laserstrahl anzuordnen und diesen parallel zum ersten Laserstrahl und mit der gleichen Geschwindigkeit zu bewegen. Ein einseitig fest eingespanntes 2,0 mm dickes Al-Blech der Legierung AA6056 wurde dabei mit einer Laserleistung von 1,8 kW und einer Vorschubgeschwindigkeit von 2,8 m/min verschweißt. Bei einem Abstand der Schweißnaht von ca. 25 mm vom seitlichen Probenrand tritt nach dem Schweißen durch längs verlaufende Heißrisse eine komplette Probentrennung ein. Wird mit dem zweiten Laser, der sich in einem Abstand von ca. 20 mm neben der Schweißnaht an der freien, nicht eingespannten Blechseite befindet, das Blech mitlaufend mit einer Laserleistung von 750 W lokal erwärmt, lassen sich Heißrisse vermeiden. Auch bei dieser Lösung wirkt sich nachteilig aus, dass das Verfahren nur für dünne Bleche geeignet ist. Die Ursache für diesen Mangel ist ebenso wie im o. a. ersten Beispiel dass auch bei diesem Verfahren der Laser nur als Oberflächenenergiequelle wirkt. Darüber hinaus ist auch diese Lösung zur Rissvermeidung für viele praktische Anwendungsfälle zu teuer. Die Ursache liegt darin, dass auch für die zweite Wärmequelle ein teurer Laser verwendet werden muss.

Aus dem Bereich des Elektronenstrahlschweißens ist bekannt geworden (siehe GB 2.283.448 A, Th. K. Johnson, Al. L. Pratt: "Improvements in or relating to electron beam welding") Risse in der Wärmeeinflusszone zu verhindern, indem das Schweißen und eine Erwärmung der Schweißnahtumgebung quasi simultan durch den gleichen Elektronenstrahl bewerkstelligt wird, indem in sehr schneller Folge der fokussierte Elektronenstrahl pulsförmig mit einer hohen Leistungsdichte schweißt und dann zur Wärmebehandlung defokussiert und ausgelenkt wird. Dadurch können die Oberflächentemperaturen vor, neben und hinter der Schweißzone gezielt eingestellt werden.

Auch hier wirkt sich nachteilig aus, dass die Energiequelle zur Erzeugung der sekundären Temperaturfelder eine Oberflächenenergiequelle darstellt, deren Wirksamkeit nicht weit genug in das Material hineinreicht, um für den Fall der Vermeidung von Heißrissen in der Schweißzone auch bei tieferen Schweißnähten und Werkstoffen schlechterer Wärmeleitfähigkeit ausreichend wirksam zu sein. Die Ursache dafür liegt wieder darin, dass die Energie des Elektronenstrahles vollständig in den obersten Randschichten absorbiert wird und sich, in Relation zur hohen Schweißgeschwindigkeit der Strahlschweißverfahren zu langsam in die Tiefe ausbreitet. Wenn dagegen die Positionen der zur Wärmebehandlung mit dem Elektronenstrahl beaufschlagten Gebiete so weit vor die Schweißposition gelegt werden, dass das zusätzliche Temperaturfeld in der Position der Schweißzone auch die Nahtwurzel erreicht, dann wirkt das Temperaturfeld nicht mehr lokal, sondern mehr wie eine allgemeine homogene Vorwärmung. Aus eigenen Experimenten ist jedoch bekannt, dass eine homogene Vorwärmung zur Heißrissvermeidung nicht ausreichend effektiv ist. Darüber hinaus ist es nachteilig, dass diese Methode nur für das Elektronenstrahlschweißen unter Vakuum genutzt werden kann.

Das Ziel der Erfindung ist es daher, ein neues und effektives Verfahren zum rissfreien Schweißen, Reparaturschweißen oder Auftragschweißen heißrissanfälliger Werkstoffe anzugeben, das auch für größere Schweißnahttiefen und größere Blechdicken geeignet, für mehrere - auch insbesondere an Atmosphäre einsetzbare - Schweißverfahren nutzbar, für eine breitere Palette metallischer Werkstoffe und dabei besonders auch solche mit schlechter Wärmeleitfähigkeit einsetzbar ist und sich darüber hinaus deutlich kostengünstiger darstellen lässt als der bekannte Stand der Technik.

Aufgabenstellung:

Der Erfindung liegt nunmehr die Aufgabe zugrunde, ein Schweißverfahren anzugeben, das es gestattet, in der Erstarrungszone die während der Abkühlung im Temperaturintervall der Sprödigkeit auftretenden Zugdehnungen zu vermeiden oder zumindest auf ein unschädliches Niveau herabzudrücken.
Erfindungsgemäß wird die Aufgabe durch ein neues Verfahren zum rissfreien Schweißen, Reparaturschweißen oder Auftragschweißen heißrissanfälliger Werkstoffe, wie in Anspruch 1 beschrieben, gelöst.

Entsprechend Anspruch 1 besteht die erfindungsgemäße Lösung für Schweißverfahren mit hoher Leistungsdichte darin, dass als Zusatzenergiequelle anstelle der nach dem Stand der Technik verwendeten Oberflächenenergiequellen elektromagnetische Volumenquellen dergestalt verwendet werden, dass sie im Inneren des Bauteils zwei speziell ausgebildete, mit der Schweißzone mitlaufende inhomogene Temperaturfelder erzeugen, die beidseitig parallel oder nahezu parallel zur Schweißrichtung verlaufen und sich längs zur Schweißrichtung erstrecken. Die beiden Temperaturfelder beginnen dabei in der Schweißrichtung betrachtet vor der Schweißzone. Ihre Temperaturmaxima befinden sich außerhalb der Wärmeeinflusszone und in Schweißrichtung hinter der Erstarrungszone der Schweißnaht wobei ihre Tiefe am Ort des Temperaturmaximums mindestens die Schweißnahttiefe erreicht.

In den Ansprüchen 2 bis 4 werden Schweißverfahren angegeben für die das erfindungsgemäße Verfahren verwendet werden kann.

Der Erfindungsgedanke ist nicht nur darauf beschränkt, dass so wie in Anspruch 2 ausgeführt, das Schweißverfahren hoher Leistungsdichte ein Laserstrahlschweißverfahren ist. Genauso gut können, wie in den Ansprüchen 3 und 4 angegeben, auch Plasma-, TIG-, WIG- oder Non-vac-Elektronenstrahlschweißanlagen verwendet werden.

Anspruch 5 beinhaltet eine besonders vorteilhafte Variante zur Erzeugung der zusätzlichen Temperaturfelder mittels einer induktiven Erwärmung. Wie in Anspruch 6 ausgeführt, kann das erfindungsgemäße Temperaturfeld aber auch mit einer konduktiven Erwärmung erzeugt werden.

Im Anspruch 7 werden Verfahrenseinflussgrößen zur Einstellung der Tiefe und Ausdehnung der zusätzlichen Temperaturfelder mittels der Wahl der Induktionsfrequenz, der Länge, Form und Ausdehnung der beiden Induktoräste, der Anbringung von Feldverstärkungselementen und der Induktionsfrequenz angegeben.

Die Ansprüche 8 und 9 geben Hinweise zur Ausgestaltung der Temperaturfelder in Abhängigkeit von der Bauteilgeometrie und im Falle der Verwendung unterschiedlicher miteinander zu verschweißender Werkstoffe.

Die Zusatzenergiequelle kann eine Volumenquelle sein, die mit dem Schweißkopf dergestalt verbunden ist, dass sie der Bewegung des Schweißkopfes mit der gleichen Geschwindigkeit folgt

Die Zusatzenergiequelle kann ein Induktor sein. Eine dazu alternative Lösung ist die Nutzung einer konduktiven Erwärmung.

Die Vorteile der erfindungsgemäßen Lösung liegen gegenüber dem Stand der Technik darin, dass sie

- geeignet ist, sehr kritische und stark heißrissempfindliche Werkstoffe heißrissfrei zu schweißen,
- eine größere Flexibilität in der Gestaltung der zusätzlichen zielgerichteten Beeinflussung des Dehnungszustandes in der Erstarrungszone im Temperaturbereich der Heißrissigkeit aufweist,
- für größerer Schweißnahttiefen, Blechdicken sowie auch für sehr hohe Schweißgeschwindigkeiten geeignet ist,
- gestattet, eine breitere Palette heißrissanfälliger Werkstoffe ohne die Verwendung von Schweißzusatzwerkstoffen heißrissfrei zu schweißen,
- auch für metallische Werkstoffe mit sehr schlechter Wärmeleitfähigkeit einsetzbar ist,
- deutlich kostengünstiger als die nach dem Stand der Technik vorgeschlagenen Lösungen zur Heißrissvermeidung durch Zusatzenergiequellen wie Laser oder Elektronenstrahl ist.

## Bezugszeichenliste

| | |
|---|---|
| 1 | zu verschweißendes Bauteil 1 |
| 2 | zu verschweißendes Bauteil 2 |
| 3 | Energiestrahl des Schweißverfahrens |
| 4 | Schweißzone |
| 5 | Keyhole |
| 6 | Erstarrungszone |
| 7 | erstarrte Schweißraupe, Schweißnaht |
| 8 | Schweißrichtung SR |
| 9 | Temperaturfeld 1 |
| 10 | Temperaturfeld 2 |
| 11 | Isothermen der Temperaturfelder |
| 12 | Schweißnahttiefe $t_s$ |
| 13 | Temperaturmaximum des elektromagnetisch erzeugten Temperaturfeldes |
| 13' | Temperaturmaximum Tmax1 des Temperaturfeldes 1 (9) |
| 13" | Temperaturmaximum Tmax2 des Temperaturfeldes 2 (10) |
| 14 | Wärmeeinflusszone WEZ |
| 15 | Induktor |

| 16 | Stromzuführung |
|---|---|
| 17 | Stromabführung |
| 18 | Induktorast 1 |
| 19 | Induktorast 2 |
| 20 | Induktorverbindungsstück |
| 21 | Magnetfeldverstärkungselemente |
| 23 | Schweißkopf |
| 24 | Stromabnehmer auf Oberseite des Bauteils 1 |
| 25 | Stromabnehmer auf Unterseite des Bauteils 1 |
| 26 | Stromabnehmer auf Oberseite des Bauteils 2 |
| 27 | Stromabnehmer auf Unterseite des Bauteils 2 |
| 28 | Oberseite des Bauteils 1 |
| 29 | Unterseite des Bauteils 1 |
| 30 | Oberseite des Bauteils 2 |
| 31 | Unterseite des Bauteils 2 |
| 32 | Schweißenergiequelle |
| 33 | Fügeebene |
| 34 | Strompfad |

$a_x$ - Abstand zwischen Beginn der Temperaturfelder 1 und 2 und dem Mittelpunkt der Schweißzone (4); $a_x$ zählt positiv wenn die Schweißzone vorläuft

$b_i$ - geringster Abstand zwischen Induktorast 1 (18) und Induktorast 2 (19)

$b_{SZ}$ - Breite der Schweißzone (4) an der Oberseite der Bauteile 1 und 2 (1, 2)

$b_x$ - Abstand zwischen Mittelpunkt der Schweißzone (4) und dem Ende der Erstarrungszone (6)

$c_X$ - Abstand zwischen Ende der Erstarrungszone (6) und dem Temperaturmaximum (13) der Temperaturfelder 1 bzw. 2 (9, 10)

$d$ - Blechdicke

$d_f$ Fokusdurchmesser des Laserstrahles

$l_i$ - Länge des Induktoräste

$l_{i\,1;\,2}$ - Länge des Induktorastes 1 (18) bzw. 2 (19)

$l_{SEZ}$ - Länge von Schweißzone (4) und Erstarrungszone (6) in Schweißrichtung SR

$t_S$ - Schweißnahttiefe (12)

$v_S$ - Vorschubgeschwindigkeit, Schweißgeschwindigkeit

$x$ - Koordinate längs zur Schweißrichtung (8)

$y$ - Koordinate quer zur Schweißrichtung (8)

$Z_{i\,1;\,2;\,3}$ - Kopplungsabstand, d. h. Abstand der beiden Induktoräste 1 (18) bzw. 2 (19) bzw. des Induktorverbindungsstückes (20) zum Bauteil 1 (1) bzw. 2 (2)

RT - Raumtemperatur

SR - Schweißrichtung

$T_{max}^{Ez}$ - Temperaturmaximum in der Erstarrungszone (6)

$T_{max1;2}$ - Temperaturmaximum der Temperaturfelder 1 und 2 (9, 10)

$T_{pre}$ - Temperatur in der Fügelinie direkt vor der Schweißzone (4)

$T_{post}$ - max. Temperatur in der Schweißnaht (7) nach der Schweißzone (4) unter einem symmetrisch über der Schweißnaht angeordneten Induktor

WEZ - Wärmeeinflusszone

$\Delta T_{IS}$ - Temperaturintervall der Sprödigkeit

**Ausführungsbeispiele**

Die Erfindung wird an den nachfolgenden Ausführungsbeispielen näher erläutert. In den Figuren sind gleiche Merkmale mit gleichen Bezugzeichen versehen.

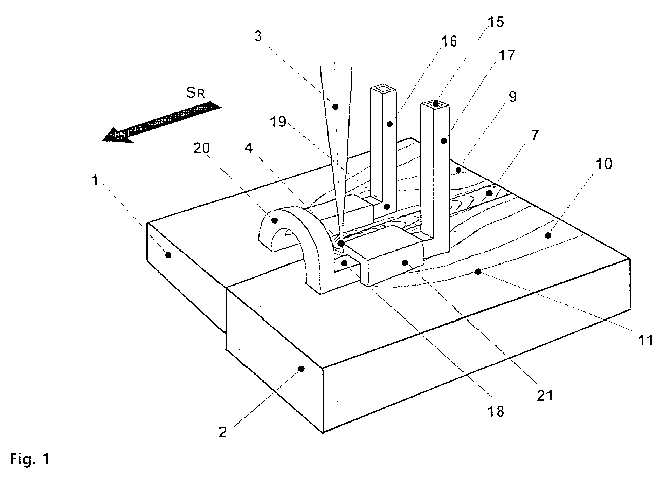

Es zeigt Fig. 1:     eine erfindungsgemäße Anordnung von Schweißenergiequelle und Zusatzenergiequelle

Fig. 2a:     eine erfindungsgemäße Temperaturfeldausbildung zur Vermeidung der Heißrissbildung

Fig. 2b:     einen Längsschnitt AA durch eines der beiden durch die Zusatzenergiequelle erzeugten Temperaturfelder sowie einen zughörigen Längsschnitt BB entlang der Symmetrielinie der Schweißnaht

Fig. 2c:     einen Querschnitt CC durch die Schweißnaht und die überlagerten Temperaturfelder von Schweißenergiequelle und Zusatzenergiequelle in einer Ebene durch die Erstarrungszone

Fig. 3:     Heißrisse in Quer- und Längsschliffen einer laserstrahlgeschweißten Naht

Fig. 4:     erfindungsgemäß erzeugte heißrissfreie Schweißnaht

Fig. 5:     Reduzierung der Neigung zur Heißrissbildung in Abhängigkeit von der Temperatur in der Nähe der Schweißzone ($T_{pre}$ - Temperatur in der Fügelinie vor der Schweißzone (4), $T_{post}$ - Temperatur in der Schweißnaht (7) nach der Schweißzone (4)) für verschiedene Zusatzenergiequellen: homogene Vorwärmung der gesamten Probe im Ofen; Linieninduktor symmetrisch über der Fügelinie direkt vor der Schweißzone (4), Linieninduktor über der Schweißnaht (7) direkt nach der Erstarrungszone (6); erfindungsgemäße Induktoranordnung

Fig. 6     erfindungsgemäße Anordnung von Schweißenergiequelle sowie Volumenenergiequelle in Form einer konduktiv wirksamen Zusatzenergiequelle

**Beispiel 1:**

Die erfinderische Lösung soll anhand des prinzipiellen Aufbaues einer zum Ausführen des Verfahrens ausgebildeten Vorrichtung und der generellen Verfahrensschritte erläutert werden.

Zwei Bleche (1, 2) aus einem heißrissempfindlichen Werkstoff sollen durch einen I-Stoß schweißtechnisch miteinander verbunden werden (siehe Fig. 1). Als Schweißenergiequelle (32) kann ein $CO_2$-Laser, ein Nd:YAG-Laser, ein Faserlaser, ein Hochleistungsdiodenlaser, eine nonvac-Elektronenstrahlkanone oder ein Plasmaschweißbrenner verwendet werden. Mit dem Schweißkopf (23) fest verbunden ist eine Volumenenergiequelle als Zusatzenergiequelle. Dazu können eine induktive oder eine konduktive Energieeinkopplung verwendet werden. Im Ausführungsbeispiel wird eine induktive Energieeinkopplung mittels eines Mittelfrequenzgenerators gewählt. Die Zusatzenergiequelle besteht in diesem Fall aus einem Induktor (15), der aus zwei parallel zur Schweißnaht (7) angeordneten Induktorästen 1 und 2 (18, 19), einem Induktorverbindungsstück (20), sowie der Stromzuführung (16) und der Stromabführung (17) aufgebaut ist. Zur Erhöhung der Energieübertragungseffizienz sowie der Variation der Position, Höhe und Ausdehnung der Temperaturfeldmaxima $T_{max1}$ (13') und $T_{max2}$ (13") können sich auf einem oder beiden Induktorästen 1 bzw. 2 (18 bzw. 19) Magnetfeldverstärkungselemente (21) befinden.

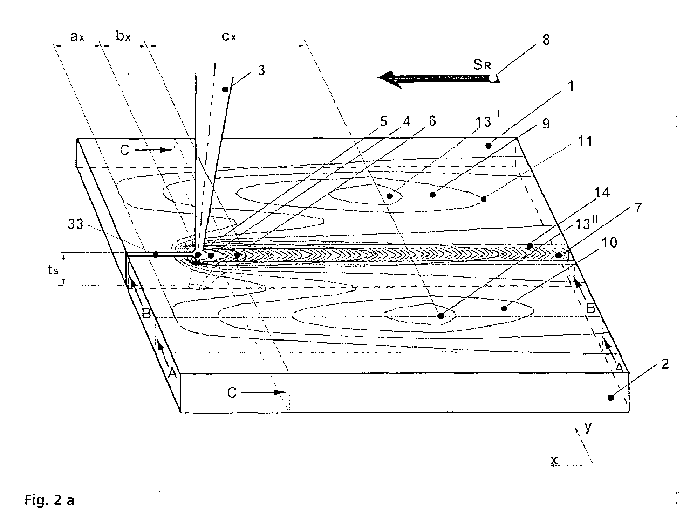

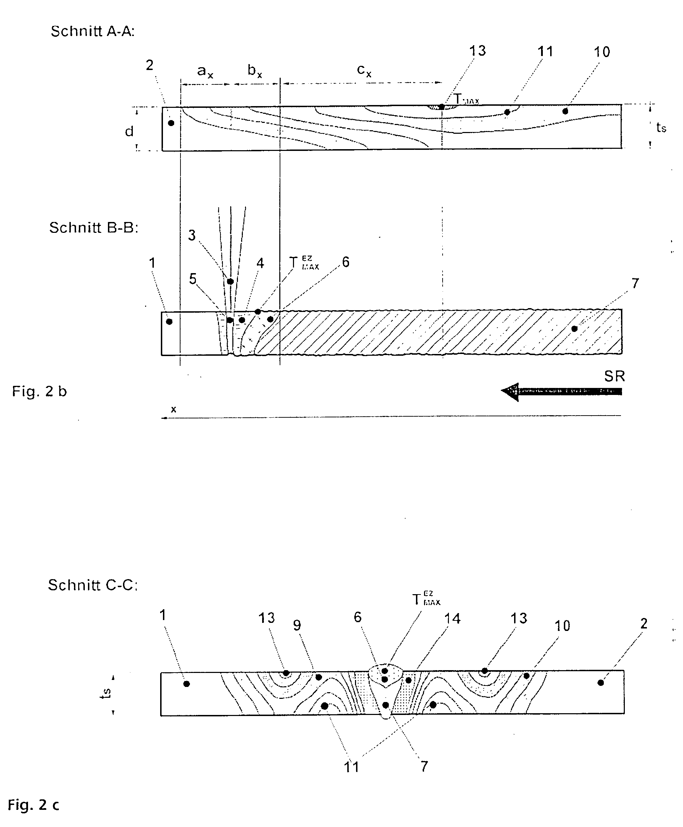

Nach dem Einschalten der Zusatzenergiequelle und der Schweißenergiequelle (32) wird der Schweißprozess gestartet. Im allgemeinen bewegt sich die Zusatzenergiequelle mit der gleichen Vorschubgeschwindigkeit $v_S$ wie die Schweißenergiequelle (32). Während der Bewegung erzeugt die Zusatzenergiequelle zwei zusätzliche Temperaturfelder 1 und 2 (9, 10), siehe Fig. 2a. Sie befinden sich beidseitig der Schweißnaht (7) und erstrecken sich von einer Position vor der Schweißzone (4) bis mindestens hinter die Erstarrungszone (6). Die Temperaturfeldmaxima $T_{max1}$ und $T_{max2}$ (13', 13") der beiden Temperaturfelder (9, 10) befinden sich in Schweißrichtung SR (8) hinter der Erstarrungszone (6) und außerhalb der Wärmeeinflusszone (siehe Fig. 2b und Fig. 2c). Die Lage der Temperaturfeldmaxima $T_{max1}$ und $T_{max2}$ (13', 13") wird quer zur Schweißrichtung SR (8) durch den Abstand der beiden Induktoräste (18, 19), und längs der Schweißrichtung SR (8) durch die Positionierung des Induktors (15) relativ zum Energiestrahl des Schweißverfahrens (3), die Länge und Form der Induktoräste (18, 19), die Anbringung, Ausbildung und Positionierung von Magnetfeldverstärkungselementen (21) und den Kopplungsabstand zwischen Bauteil (1, 2) und den Induktorästen (18, 19) eingestellt. Die Höhe der Temperaturmaxima $T_{max1}$ und $T_{max2}$ (13', 13") wird durch die Wahl des Induktorstromes vorgegeben.

Im allgemeinen Fall gekrümmter Schweißnähte (7), unterschiedlicher Blechdicken oder unterschiedlicher Werkstoffe der beiden zu verschweißenden Bauteile 1 und 2 (1, 2) brauchen die Temperaturfelder (9 und 10) sowie die Höhe der Temperaturfeldmaxima $T_{max1}$ und $T_{max2}$ (13', 13") nicht notwendiger Weise gleich sein und völlig symmetrisch zur Schweißnaht (7) liegen. Die Induktionsfrequenz wird in Abhängigkeit von der Blechdicke und den elektromagnetischen Eigenschaften der Werkstoffe so gewählt, dass die Tiefe der Temperaturfelder (9, 10) am Ort der Temperaturfeldmaxima $T_{max1}$ und $T_{max2}$ (13', 13") mindestens die Schweißnahttiefe $t_S$ (12) erreicht (siehe auch Fig. 2b und 2c).

**Beispiel 2:**

Automatenstähle besitzen zur Verbesserung der Zerspanbarkeit und der Bildung kurz brechender Drehspäne einen erhöhten Schwefelgehalt. Dieser Schwefel bildet beim Aufschmelzen mit dem Eisen niedrig schmelzende Eutektika, die beim Schweißen zu einer Heißrissbildung führen. Automatenstähle gelten deshalb als nicht schweißbar. In verstärktem Maße trifft das auf die vergütbaren Automatenstähle zu, die zur Sicherstellung ihrer Härtbarkeit zusätzlich einen Kohlenstoffgehalt größer als etwa 0,3 % aufweisen. Obwohl die erfindungsgemäße Vorgehensweise vorteilhaft auch auf andere heißrissgefährdete Werkstoffe wie z. B. austenitische Stähle, Al-Legierungen und Ni-Legierungen angewendet werden kann, soll wegen der besonderen Schwierigkeit und des Fehlens von geeigneten alternativen Lösungen, wie z. B. heißrissvermeidende Schweißzusatzwerkstoffe, die Eignung des Verfahrens am Beispiel von vergütbaren Automatenstählen nachgewiesen werden.

Zwei 250 mm lange, 100 mm breite und 6 mm dicke Platten aus dem vergütbaren Automatenstahl 45S20 (chemische Zusammensetzung: ca. 98 % Fe; 0,43 % C; 0,201 % S; 0,25 % Si; 0,94 % Mn; 0,018 % P) sollen an ihrer Längsseite mittels Laserstrahlschweißen gefügt werden.

Zum Laserstrahlschweißen wird als Schweißenergiequelle (32) ein quergeströmter 6 kW-$CO_2$-Laser verwendet. Die Laserstrahlleistung wird auf 5,5 kW eingestellt. Die Schweißgeschwindigkeit $v_S$ beträgt $v_S$ = 1,5 m/min. Als Schutzgas wird Helium in einer Menge von 15 l/min mittels einer schleppenden Düsenanordnung zugeführt.

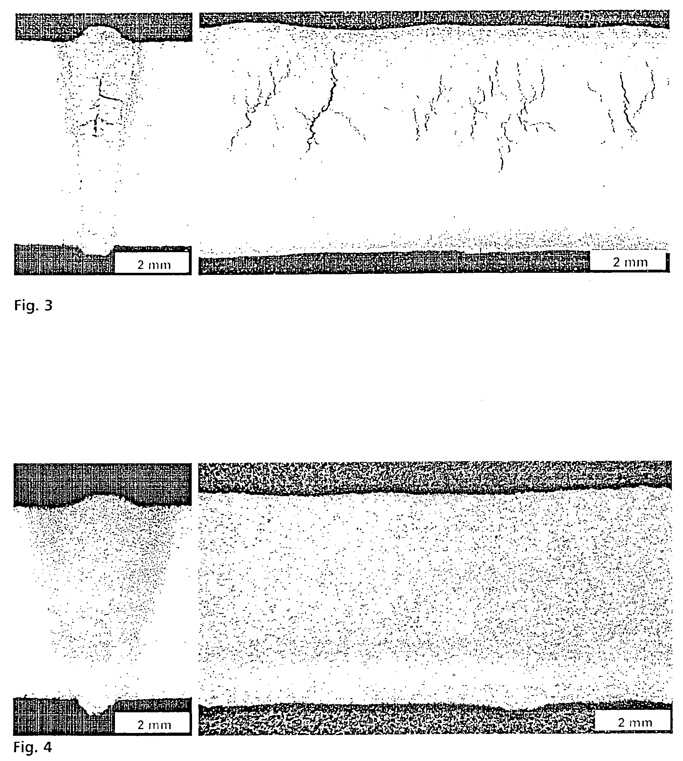

Obwohl die Schweißnaht gut ausgebildet ist, weist sie, wie Quer- und Längsschliff zeigen (siehe Fig. 3), eine Vielzahl von quer und längs liegenden Heißrissen auf, die die Verwendung solcherart hergestellter Platten unmöglich machen.

Zur Vermeidung der Heißrissigkeit wird als Zusatzenergiequelle eine induktive Energiequelle verwendet. Der Induktionsgenerator hat eine Frequenz von 9 kHz. Der doppelarmige Induktor (schematische Darstellung in Fig. 1) besteht aus zwei geraden Induktorästen 1 und 2 (18, 19) mit einem Querschnitt von 8 x8 mm². Beide Induktoräste (18, 19) sind $l_i = l_{i1} = l_{i2}$ = 60 mm lang, haben einen Abstand von $b_i$ = 20 mm und werden antiparallel vom Strom durchflossen. Der Kopplungsabstand beträgt 2,0 mm und ist über die gesamt Induktorlänge konstant. Die Magnetfeldverstärkungselemente (21) für beide Induktoräste (18, 19) bestehen aus U-förmig ausgearbeiteten, 44 mm langen Fluxtrol® - Stücken.

Der Induktor wird mittig zur Schweißnaht (7) positioniert. Als Abstand $a_x$ zwischen dem Beginn der Temperaturfelder 1 und 2 (18, 19) und dem Mittelpunkt der Schweißzone (4), näherungsweise gemessen als geringsten Abstand zwischen der Mittellinie des Energiestrahles des Schweißverfahrens (3) und der Verbindungslinie zwischen den beiden vorderen Kanten der Induktoräste 1 und 2 (18, 19) wird ein Wert $a_x \approx 20$ mm gewählt. Die induktive Leistung wird auf eine Effektiv-Leistungsanzeige am Induktionsgenerator von 20 kW eingestellt.

Die Länge $l_{SEZ}$ der Schweißzone (4) und der Erstarrungszone (6) beläuft sich auf $l_{SEZ} \approx 22$ mm. Zur Durchführung der Schweißungen werden die gleichen Schweißparameter wie bei den Schweißungen ohne Zusatzenergiequelle eingestellt. Der Induktor (15) wird simultan mit dem Schweißkopf (23) bewegt. Beim Erreichen der Startposition wird der Induktor (15) und zeitverzögert der Laserstrahl eingeschaltet.

Mit diesen Einstellparametern wird ein Temperaturmaximum $T_{max} = T_{max1} = T_{max2} = 850°C$ erreicht. Die Temperaturmaxima $T_{max1}$ und $T_{max2}$ liegen etwa $b_x + c_x \approx 32$ mm hinter der Position des Mittelpunktes des Energiestrahles des Schweißverfahrens (3). Der Abstand $b_x$ zwischen dem Mittelpunkt der Schweißzone (4) und dem Ende der Erstarrungszone (6) beträgt etwa $b_x \approx 20$ mm. Damit gilt für die gewählte Länge der Induktoräste $l_{i1} = l_{i2} \approx 3 * l_{SEZ}$ und für den Abstand $b_i$ zwischen den Induktorästen $b_i \approx 5 * b_{SZ}$.

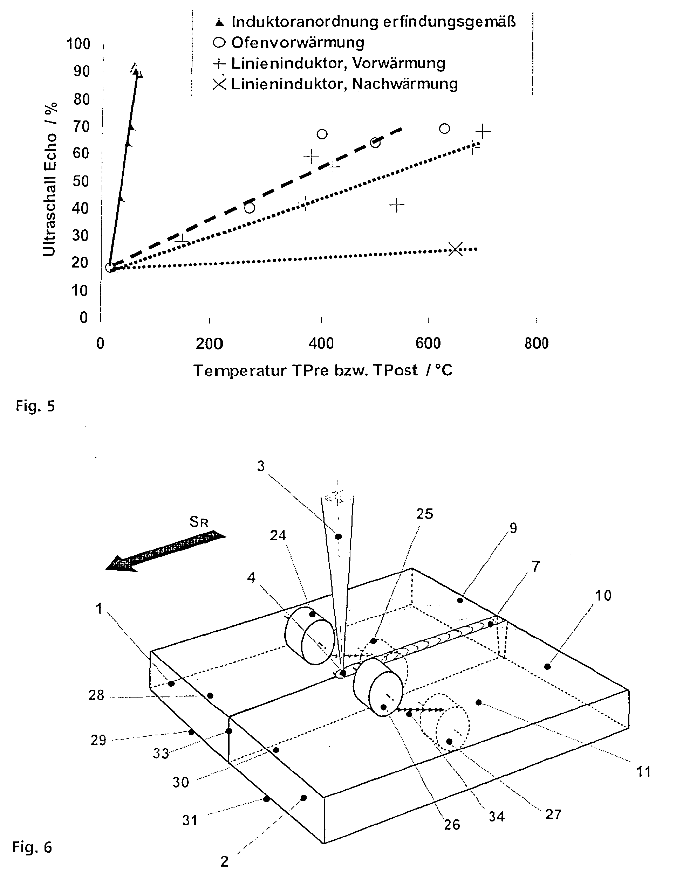

Fig. 4 zeigt einen Querschliff und einen Längsschliff einer nach dem erfindungsgemäßen Verfahren hergestellten Schweißnaht. Die Naht ist völlig rissfrei. Die Rissfreiheit geht einher mit einer drastischen Verbesserung der mechanischen Eigenschaften der geschweißten Platten. So wird die Zugfestigkeit der Schweißnaht im Querzugversuch von 281 MPa auf 535 MPa angehoben. Gleichzeitig steigt der Wert der Wechselfestigkeit im Zugschwellversuch (R = 0) von ca. 40 MPa auf ca. 130 MPa. Die Ursache für die Vermeidung der Heißrissbildung besteht darin, dass es während der Erstarrung und Abkühlung der Schweißnaht zumindest im heißrisskritischen Temperaturintervall $\Delta T_{IS}$ gelingt, die thermischen Schrumpfungen der Schweißnaht (7) durch die thermischen Volumenzuwächse der beiden durch die Volumenenergiequelle erzeugten Temperaturfelder (9, 10) ausreichend zu kompensieren. Dass wirklich dieser Effekt dafür verantwortlich ist und nicht ein Eingriff in die Abkühlgeschwindigkeit oder die Gefügeumwandlung in der Schweißnaht, wird in Fig. 5 bewiesen. Mit dem gleichen Werkstoff, Probenabmessungen, Schweißparametern wurden auch die Auswirkungen homogener zusätzlicher Temperaturfelder (Probenerwärmung im Ofen) sowie symmetrischer lokaler Temperaturfelder mit einem Temperaturmaximum in der Fügeebene (33) oder der Schweißnaht (7) direkt vor der Schweißzone (4) oder hinter der Erstarrungszone (6) untersucht. Als Maß für die Rissbildungsneigung wurde der Wert des relativen Ultraschallechos verwendet. Eine abnehmende Rissanzahl korreliert mit einer Zunahme des Wertes des relativen Ultraschallechos; ab einem Wert von 85 % sind die Proben rissfrei. Aus Fig. 5 ist zu entnehmen, dass ein induktives Nachwärmen erwartungsgemäß überhaupt keinen Einfluss auf die Vermeidung von Heißrissen hat und dass weder mit einer Ofenvorwärmung noch mit einer induktiven Vorwärmung mit einem Temperaturmaximum in der Fügeebene (33) rissfreie Zustände erreicht werden können. Da mit den alternativ getesteten zusätzlichen Temperaturfeldern die Abschreckgeschwindigkeit, die lokale Temperatur in der Umgebung der Schweißzone und die Gefügeumwandlungen in einem ähnlichen Wertebereich jedoch ohne einen entscheidenden Einfluss auf die Rissvermeidung geändert werden konnten wie bei der erfindungsgemäßen Lösung, ist nachgewiesen, dass die Absenkung der thermischen Zugdehnungen in der Erstarrungszone entscheidend ist.

**Beispiel 3:**

Rohrförmige Teile aus einem heißrissanfälligen austenitischen rostfreien Stahl sollen durch Laserstrahlschweißen verbunden werden. Das konventionelle Laserstrahlschweißen lässt eine sichere Heißrissvermeidung nicht zu.

Die Rohrwandstärke beträgt 6 mm. Da die induktive Energieeinkopplung in den austenitischen Werkstoff nicht so effektiv möglich ist wie in ein ferritisches Material, aber andererseits der elektrische Widerstand und die erzeugbare Joule'sche Wärme relativ groß sind, bietet sich für diesen Fall eine konduktiv wirkende Zusatzenergiequelle als Volumenenergiequelle an. Dazu werden, wie in Fig. 6 dargestellt, zwei rollenförmige Stromabnehmer (24, 25), die mit dem Schweißkopf mechanisch verbunden sind und aus einer Kupferlegierung bestehen federnd gegen die Oberfläche der Bauteile 1 und 2 gepresst. In Vorschubrichtung (8) gesehen, befinden sich die beiden Stromabnehmer (24, 25) ca. 3 mm vor der Mittellinie des Laserstrahles (3). Die beiden unteren Stromabnehmer (26, 27) befinden sich ca. 5 mm hinter der Position der beiden oberen Stromabnehmer (24, 25).

Vor dem Start des Schweißprozesses wird der konduktive Stromfluss durch die Stromabnehmer (24-26 bzw. 25-27) und die Bauteile (1) und (2) gestartet. Entlang des etwa schlauchförmigen Strompfades werden durch die Joule'sche Wärme zwei die Blechdicke d durchgreifende und geneigt zur Oberfläche liegende Temperaturfelder erzeugt, die zu einer thermischen Ausdehnung der erwärmten Volumina der Bauteile (1) und (2) führen. Wenn die gewünschte Solltemperatur erreicht ist, wird der als Schweißenergiequelle (32) verwendete Laser zugeschaltet und der Vorschub mit der Geschwindigkeit $v_S$ gestartet. Die beiden so erzeugten Temperaturfelder (9, 10) führen zu einer Abminderung der Zugdehnungen in der Erstarrungszone (7) während des Durchschreitens des Temperaturintervalls der Sprödigkeit $\Delta T_{IS}$ und gestatten damit ein heißrissfreies Schweißen.

**Patentansprüche**

1.  Verfahren zum rissfreien Schweißen, Reparaturschweißen oder Auftragschweißen von Bauteilen (1, 2) aus heißrissanfälligen Werkstoffen mittels eines Schweißverfahrens hoher Leistungsdichte und einer weiteren, mit der Schweißgeschwindigkeit, also mit der Vorschubgeschwindigkeit des Energiestrahls (3) des Schweißverfahrens, in einem konstanten Abstand zur Schweißzone (4) des Energiestrahls (3) des Schweißverfahrens mitlaufenden örtlichen Temperaturbeaufschlagung,
    **dadurch gekennzeichnet, dass**
    die mitlaufende örtliche Temperaturbeaufschlagung durch zwei parallel oder nahezu parallel zur Schweißrichtung (8), also zur Vorschubrichtung des Energiestrahls (3) des Schweißverfahrens, verlaufende und sich zur Schweißrichtung (8) längs erstreckende elektromagnetisch durch eine Volumenenergiequelle im Inneren der Bauteile (1, 2) erzeugte Temperaturfelder (9, 10) erfolgt,
    die beide in Schweißrichtung (8) vor der Schweißzone (4) beginnen und deren Temperaturmaxima (13) sich außerhalb der Wärmeeinflusszone (14) und in Schweißrichtung (8) hinter der Erstarrungszone (6) der Schweißnaht (7) befinden und die Tiefe der Temperaturfelder (9, 10) am Ort des Temperaturmaximums (13) mindestens die Schweißnahttiefe (12) der Schweißnaht (7) erreicht.

2.  Verfahren nach Anspruch 1, **dadurch gekennzeichnet, dass** als Schweißverfahren hoher Leistungsdichte ein Laserstrahlschweißen verwendet wird.

3.  Verfahren nach Anspruch 1, **dadurch gekennzeichnet, dass** als Schweißverfahren hoher Leistungsdichte ein Plasma-, TIG-, oder WIG-Verfahren dient.

4.  Verfahren nach Anspruch 1, **dadurch gekennzeichnet, dass** als Schweißverfahren hoher Leistungsdichte ein non-vac-Elektronenstrahlschweißverfahren Anwendung findet.

5.  Verfahren nach Anspruch 1 oder einem der Ansprüche von 2 bis 4, **dadurch gekennzeichnet, dass** die Temperaturfelder (9, 10) durch induktive Erwärmung erzeugt werden.

6.  Verfahren nach Anspruch 1 oder einem der Ansprüche von 2 bis 4, **dadurch gekennzeichnet, dass** die Temperaturfelder (9, 10) durch konduktive Erwärmung hervorgerufen werden.

7.  Verfahren nach Anspruch 5, **dadurch gekennzeichnet, dass** die Tiefe der beiden Temperaturfelder (9, 10), ihr Abstand und ihre Ausdehnung durch die Induktionsfrequenz, die Länge und Abstand der beiden Induktoräste (18, 19), die Anbringung von Magnetfeldverstärkungselementen (21) und die induktive Leistung eingestellt wird.

8.  Verfahren nach Anspruch 1 oder 5 oder 6, **dadurch gekennzeichnet, dass** bei symmetrischen Wärmeableitungsbedingungen der beiden Bauteile 1 und 2 (1, 2) und bei gleichen Werkstoffen die beiden Temperaturfelder 1 und 2 (9, 10) symmetrisch zur Lage der Schweißnaht angeordnet werden.

9.  Verfahren nach Anspruch 1 oder 5 oder 6, **dadurch gekennzeichnet, dass** bei unterschiedlichen Werkstoffen und/oder unsymmetrischen Wärmeableitungsbedingungen der beiden Bauteile 1 und 2 (1, 2) die beiden Temperaturfelder 1 und 2 (9, 10) in ihrer Ausdehnung, Tiefe und Höhe der Temperaturmaxima $T_{max1}$ bzw. $T_{max2}$ unterschiedlich ausgebildet werden.

**Claims**

1.  Method for the crack-free welding, repair welding or build-up welding of components (1, 2) made from materials that are susceptible to developing hot cracks, by means of a high power density welding method and by means of a further local application of temperature that is synchronous with the welding speed, so synchronous with the feed rate of the energy beam (3) of the welding method, at a constant distance to the weld zone (4) of the energy beam (3) of the welding method,
    **characterised in that**
    the synchronous, local application of temperature is carried out by two temperature fields (9, 10) which run parallel, or virtually parallel, to the weld direction (8), so to the feed direction of the energy beam (3) of the welding method, and which extend longitudinally relative to the weld direction (8) and which are generated electromagnetically by a volume energy source in the interior of the components (1, 2), said temperature fields both beginning, in the weld direction (8), before the weld zone (4) and their maximum temperatures (13) being outside the heat affected zone (14) and being, in the weld direction (8), behind the solidification zone (6) of the weld seam (7), and
    that the depth of the temperature fields (9, 10) reaches at least the weld seam depth (12) of the weld seam (7) at the site of the maximum temperature (13).

2. Method according to claim 1, **characterised in that** laser beam welding is used as the high power density welding method.

3. Method according to claim 1, **characterised in that** a plasma, TIG or WIG method serves as the high power density welding method.

4. Method according to claim 1, **characterised in that** a non-vacuum electron beam welding method is used as the high power density welding method.

5. Method according to claim 1 or one of claims 2 to 4, **characterised in that** the temperature fields (9, 10) are generated by inductive heating.

6. Method according to claim 1 or one of claims 2 to 4, **characterised in that** the temperature fields (9, 10) are caused by conductive heating.

7. Method according to claim 5, **characterised in that** the depth of the two temperature fields (9, 10), their spacing and their expansion are adjusted by induction frequency, the length and spacing of the two inductor branches (18, 19), the application of magnetic field reinforcement elements (21) and the inductive power.

8. Method according to claim 1 or 5 or 6, **characterised in that**, with symmetrical heat dissipation conditions of the two components 1 and 2 (1, 2) and with the same materials, the two temperature fields 1 and 2 (9, 10) are arranged symmetrically relative to the position of the weld seam.

9. Method according to claim 1 or 5 or 6, **characterised in that**, with different materials and/or asymmetrical heat dissipation conditions of the two components 1 and 2 (1, 2), the two temperature fields 1 and 2 (9, 10) are formed differently in terms of their expansion, depth and size of their maximum temperatures $T_{max1}$ or $T_{max2}$.

**Revendications**

1. Procédé de soudure, de soudure de réparation ou de soudure par apport de matière, sans fissures, de composants (1, 2) constitués de matériaux susceptibles de présenter des fissures au moyen d'un procédé de soudure à haute densité de puissance et une autre sollicitation en température locale synchronisée avec la vitesse de soudure, donc avec la vitesse d'avance du faisceau énergétique (3) du procédé de soudure, à une distance constante par rapport à la zone de soudure (4) du faisceau énergétique (3) du procédé de soudure, **caractérisé en ce que** la sollicitation en température locale synchrone est produite par deux champs de température (9, 10) parallèles ou presque parallèles à la direction de soudure (8), donc à la direction d'avance du faisceau énergétique (3) du procédé de soudure et s'étendant, de manière électromagnétique, le long de la direction de soudure (8), générés par une source d'énergie volumique à l'intérieur des composants (1, 2), les deux commencent dans la direction de soudure (8) avant la zone de soudure (4) et leurs maxima de température (13) se trouvent hors de la zone d'influence de la chaleur (14) et, dans la direction de soudure (8), derrière la zone de solidification (6) du cordon de soudure (7) et la profondeur des champs de température (9, 10) atteint, à l'endroit du maximum de température (13), au moins la profondeur (12) du cordon de soudure (7).

2. Procédé selon la revendication 1, **caractérisé en ce que** le procédé de soudure à haute densité de puissance utilisé peut être un procédé de soudure par faisceau laser.

3. Procédé selon la revendication 1, **caractérisé en ce que** le procédé de soudure à haute densité de puissance utilisé peut être un procédé au plasma, TIG ou WIG.

4. Procédé selon la revendication 1, **caractérisé en ce que** le procédé de soudure à haute densité de puissance utilisé peut être un procédé de soudure à faisceau d'électrons non-vac.

5. Procédé selon la revendication 1 ou selon l'une des revendications 2 à 4, **caractérisé en ce que** les champs de température (9, 10) sont générés par chauffage inductif.

6. Procédé selon la revendication 1 ou selon l'une des revendications 2 à 4, **caractérisé en ce que** les champs de température (9, 10) sont générés par chauffage conductif.

7. Procédé selon la revendication 5, **caractérisé en ce que** la profondeur des deux champs de température (9, 10), leur distance et leur extension sont réglées par la fréquence d'induction, la longueur et la distance entre les deux branches de l'inducteur (18, 19), le montage d'éléments de renforcement du champ magnétique (21) et la puissance inductive.

8. Procédé selon la revendication 1 ou 5 ou 6, **caractérisé en ce que**, dans des conditions de déviation thermique symétrique des deux composants 1 et 2 (1, 2) et dans le cas de matériaux identiques, les deux champs de température 1 et 2 (9, 10) sont disposés symétriquement par rapport à la position du cordon de soudure.

9. Procédé selon la revendication 1 ou 5 ou 6, **caractérisé en ce que**, dans le cas de matériaux différents et/ou d'une déviation thermique non symétrique des deux composants 1 et 2 (1, 2), les deux champs de température 1 et 2 (9, 10) sont conçus différemment en ce qui concerne leur extension, leur profondeur et la hauteur des maxima de température $T_{max1}$ ou $T_{max2}$.

Fig. 1

Fig. 2 a

Schnitt A-A:

Schnitt B-B:

Fig. 2 b

Schnitt C-C:

Fig. 2 c

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 794001 A
- WO 03031108 A

- GB 2283448 A

**In der Beschreibung aufgeführte Nicht-Patentliteratur**

- Integrated Mechanical-Metallurgical Approach to Modelling of Solidification Cracking in Welds. **V. PLOSHIKHIN ; A. PRIKHODOVSKY ; M. MAKHUTIN ; A. ILIN ; H.-W. ZOCH.** Hot Cracking Phenomena in Welds. Springer Verlag, 2005, 223-244